(19) Europäisches Patentamt
European Patent Office
Office européen des brevets

(11) **EP 1 557 935 B1**

(12) **EUROPEAN PATENT SPECIFICATION**

(45) Date of publication and mention
of the grant of the patent:
**13.08.2008 Bulletin 2008/33**

(51) Int Cl.:
***H02M 5/458*** *(2006.01)*

(21) Application number: **05001547.8**

(22) Date of filing: **26.01.2005**

(54) **Inverter controlling apparatus for driving a motor and an air conditioner using same**

Wechselrichtersansteuervorrichtung für die Stromversorgung eines Motors und Klimaanlage unter Verwendung dieser Vorrichtung

Appareil de commande d'un onduleur alimentant un moteur et climatisation utilisant un tel appareil

(84) Designated Contracting States:
**ES FR IT**

(30) Priority: **26.01.2004 JP 2004016808**

(43) Date of publication of application:
**27.07.2005 Bulletin 2005/30**

(73) Proprietor: **MATSUSHITA ELECTRIC INDUSTRIAL CO., LTD.**
**Kadoma-shi, Osaka 571-8501 (JP)**

(72) Inventors:
• **Matsushiro, Hideo**
**Kusatsu-shi**
**Shiga 525-0072 (JP)**

• **Sugimoto, Tomohiro**
**Kusatsu-shi**
**Shiga 525-0067 (JP)**
• **Ogawa, Masanori**
**Kusatsu-shi**
**Shiga 525-0023 (JP)**

(74) Representative: **Jacoby, Georg et al**
**Samson & Partner**
**Widenmayerstrasse 5**
**80538 München (DE)**

(56) References cited:
| | |
|---|---|
| **EP-A- 1 152 521** | **EP-A- 1 359 033** |
| **US-A- 4 843 533** | **US-A- 5 481 451** |
| **US-A- 5 532 569** | **US-A- 5 601 741** |
| **US-B1- 6 313 602** | |

**Description**

The present invention relates to an inverter controlling apparatus for driving a motor, which utilizes a small capacity reactor and a small capacity capacitor, and an air conditioner employing same.

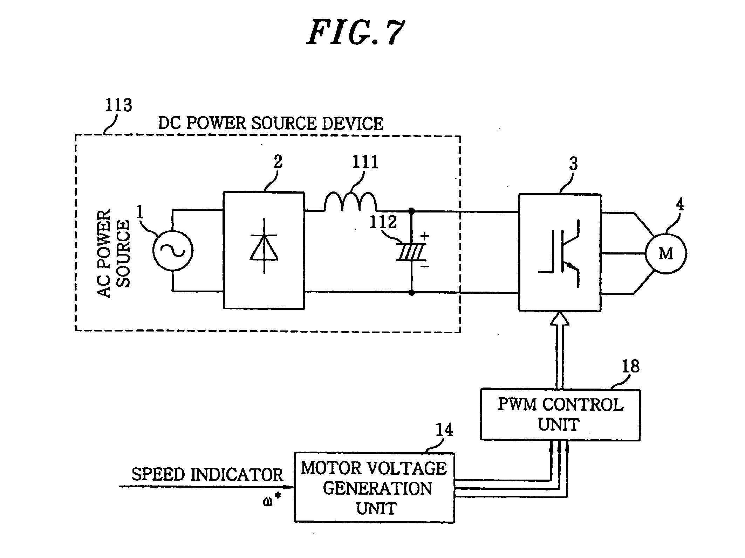

As a conventional inverter controlling apparatus for driving a motor which is used in a general-purpose inverter or the like, there is well known an inverter controlling apparatus for driving a motor which is shown in Fig. 7.

Referring to Fig. 7, there is illustrated a main circuit including DC power source device 113, inverter 3 and motor 4. DC power source device 113 includes AC power source 1, rectifying circuit 2, smoothing capacitor 112 for accumulating therein an electrical energy as a DC voltage source of inverter 3 and power factor improving reactor 111 of AC power source 1.

Meanwhile, a control circuit includes motor voltage generation unit 14 for generating phase voltage indicators of motor 4 based on a speed indicator of motor 4, which is given from an outside, and PWM (pulse width modulation) control unit 18 for generating a PWM signal of inverter 3 based on each of the phase voltage indicators generated by motor voltage generation unit 14.

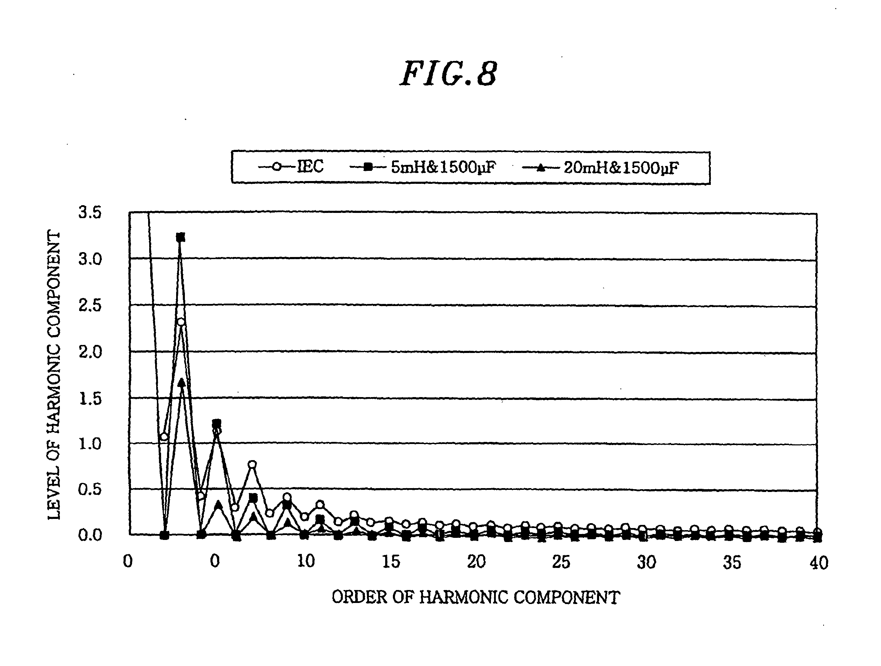

Herein, when an output of AC power source 1 is 220 V (its AC power source frequency is 50 Hz); an input power of inverter 3 is 1.5 kW; a capacitance of smoothing capacitor 112 is 1500 $\mu$F; and an inductance of power factor improving reactor 111 is 5 mH or 20 mH, a relationship between a harmonic wave component of the AC power source current and an order of an AC power source frequency is explained in Fig. 8. Fig. 8 shows the harmonic wave components for the above-described case together with those of the International Electrotechnical Commission (IEC) specification. As shown in Fig. 8, in case an inductance of power factor improving reactor 111 is 5 mH, especially a third harmonic wave component considerably exceeds that of the IEC specification, whereas in case an inductance of power factor improving reactor 111 is 20 mh, the harmonic wave components of up to 40 orders clear those of the IEC specification (see, e.g., "Inverter drive handbook", inverter drive handbook publication committee, 1995, issued by daily industrial paper company).

Accordingly, an inductance value of power factor improving reactor 111 needs to be increased in order to clear the values of the IEC specification especially even in case of a high load, which causes a size of an inverter controlling apparatus to be larger and increases the cost to implement it.

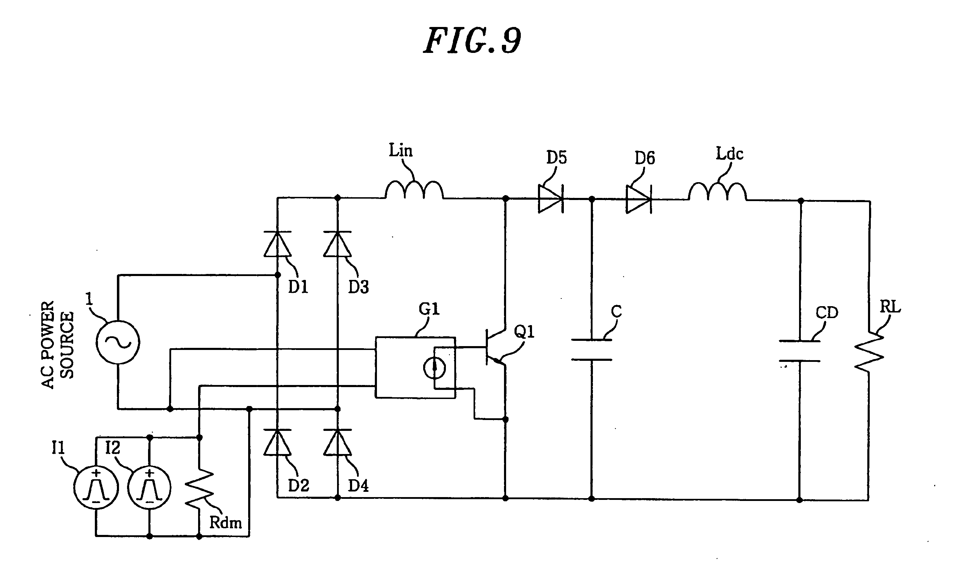

Therefore, as a DC power source device capable of suppressing the increase of the inductance of power factor improving reactor 111 and achieving a reduction of the power source harmonic wave component and a high power factor thereof, there has been proposed a DC power source device shown in Fig. 9 (see, e.g., Japanese Patent Laid-Open Application No. H9-266674).

Referring to Fig. 9, an AC power source voltage of AC power source 1 is applied to an AC input terminal of a full wave rectifying circuit formed by bridge-connecting diodes D1 to D4; an output thereof is charged to intermediate capacitor C via reactor Lin; and finally a DC voltage is supplied to load resistance RL by discharging a charge of intermediate capacitor C into smoothing capacitor CD. Further, transistor Q1 is connected between a low voltage output terminal of the bridge-connecting diodes and a load side of reactor Lin, which is driven by base driving circuit G1.

Moreover, pulse generating circuits I1 and I2 for applying a pulse voltage to base driving circuit G1 and dummy resistance Rdm are provided, wherein each of pulse generating circuits I1 and I2 includes a circuit for detecting a zero crossing point of the AC power source voltage and a pulse current circuit for generating a pulse current to flow through dummy resistance Rdm until an instantaneous value of the AC power source voltage becomes equal to a voltage applied between two terminals of intermediate capacitor C based on the detected zero crossing point.

In this case, pulse generating circuit I1 generates a pulse voltage during a first half cycle of the AC power source voltage, which pulse generating circuit I2 generates a pulse voltage during a second half cycle of the AC power source voltage.

Further, backward current blocking diode D5 is provided for preventing charge of intermediate capacitor C from being discharged through transistor Q1 when current is forced to flow into reactor Lin by turning on transistor Q1. Furthermore, backward current blocking diode D6 and reactor Ldc for enhancing a smoothing effect are serially connected to each other on a path where the charge of intermediate capacitor C is discharged into smoothing capacitor CD.

In accordance with the configuration described above, a high power factor and a reduction of the harmonic wave component can be achieved, while miniaturizing the size of the apparatus, by turning on transistor Q1 in a whole or partial phase range where the instantaneous value of the AC power source voltage does not exceed a voltage applied between two terminals of intermediate capacitor C.

However, the conventional apparatus still includes smoothing capacitor CD having a high capacitance and reactor Lin (simulation results obtained in case of 1500 $\mu$F and 6.2 mH are disclosed in the Japanese Patent Laid-Open Application supra) and further includes intermediate capacitor C, transistor Q1, base driving circuit G1, pulse generating circuits 11 and 12, dummy resistance Rdm, backward current blocking diodes D5 and D6 and the reactor Lin for enhancing a smoothing effect, thereby increasing its cost, which accompanies a scaling of the apparatus and an increase in the number of components included therein.

Prior art document US 5,481,451 proposes an AC-to-AC power inverter apparatus in which the effects of AC ripple contained in an intermediate DC voltage produced in the apparatus are eliminated from the output AC voltage, thereby enabling the inverter apparatus to function without a large capacitance smoothing capacitor. The amplitude of the DC voltage, including the AC ripple amplitude, is detected, the amplitude of a reference AC waveform is divided by the detected amplitude, and the value of the resultant ratio is applied to control the duty factor of a PWM signal, which controls a DC-to-AC inverter circuit. Changes in the DC voltage due to AC ripple are thereby prevented from affecting the output AC voltage obtained, which has an average value waveform corresponding to the reference waveform.

EP 115251 discloses an inverter control apparatus with an instantaneous DC voltage detecting section and an arithmetic processing section correcting the PWM width so as to maintain the output AC voltage at a desired value following the variations of the instantaneous DC voltage.

US 6,313,602 discloses a modified PWM space vector technique which includes a DC ripple voltage measurement scheme supplying feed-back to a DSP controller which then computes and generates the instantaneous PWM drives required for ripple voltage cancellation in a lightly filtered line voltage node, and executes the interface to the multi-phase power inverter circuitry. This becomes part of a closed loop motor speed control process. Use of the modified PWM drive in this manner greatly reduces the value of the filter capacitor required.

It is, therefore, an object of the present invention to provide an inverter controlling apparatus for driving a motor, which has a small size, a light weight and a cost effectiveness.

In accordance with the present invention, there is provided an inverter controlling apparatus for driving a motor according to claim 1, including: a rectifying circuit having an AC electrical source as an input, having: a diode bridge; and a reactor connected to a DC input or an AC input of the diode bridge; an inverter for converting a DC electric power into an AC electric power, a capacitor being connected to DC input lines of the inverter; a motor; an inverter DC voltage detection unit for detecting a DC voltage value of the inverter; an AC input blocking unit for blocking an AC power input in case the detected DC voltage value of the inverter which is obtained by the inverter DC voltage detection unit is greater than or equal to a preset threshold value; a motor voltage generation unit for generating phase voltage indicator values of the motor based on a motor speed indicator supplied from an outside; an inverter DC voltage correction unit for outputting a PN voltage correcting coefficient by dividing a predetermined DC voltage reference value of the inverter by the detected DC voltage value of the inverter which is obtained by the inverter DC voltage detection unit in case the detected DC voltage value is greater than zero, and setting the PN voltage correcting coefficient to be a predetermined maximum value of the PN voltage correcting coefficient in case the detected DC voltage value is smaller than or equal to zero; and a motor voltage correction unit for correcting the phase voltage indicator values by multiplying the phase voltage indicator values obtained by the motor voltage generation unit with the PN voltage correcting coefficient which is an output value of the inverter DC voltage correction unit; and a PWM control unit for outputting a PWM signal to the inverter in response to the corrected phase voltage indicator values.

The above and other objects and features of the present invention will become apparent from the following description of preferred embodiments, given in conjunction with the accompanying drawings, in which:

Fig. 1 is a block diagram showing a system configuration of an inverter controlling apparatus for driving a motor in accordance with a first embodiment of the present invention;
Fig. 2 illustrates a characteristic graph showing an operation of a method of obtaining a PN voltage correcting coefficient in accordance with the first embodiment of the present invention;
Fig. 3 depicts a flowchart showing an operation of an AC input blocking unit in accordance with the first preferred embodiment of the present invention;
Fig. 4 provides a block diagram describing a system configuration of an inverter controlling apparatus for driving a motor in accordance with a second preferred embodiment of the present invention;
Fig. 5 provides a characteristic graph showing a first operation result of an inverter controlling apparatus for driving a motor in accordance with a third preferred embodiment of the present invention;
Fig. 6 represents a characteristic graph showing a second operation result of the inverter controlling apparatus for driving a motor in accordance with the third preferred embodiment of the present invention;
Fig. 7 offers a block diagram showing a system configuration of a conventional inverter controlling apparatus for driving a motor;
Fig. 8 represents a characteristic graph showing a relationship between a harmonic wave component of an AC power source current and an order of an AC power source frequency in the conventional inverter controlling apparatus for driving a motor; and
Fig. 9 is a block diagram showing a conventional DC power source device.

Hereinafter, preferred embodiments of the present invention will be described with reference to the accompanying drawings. Further, the present invention is not limited to the preferred embodiments.

(Embodiment 1)

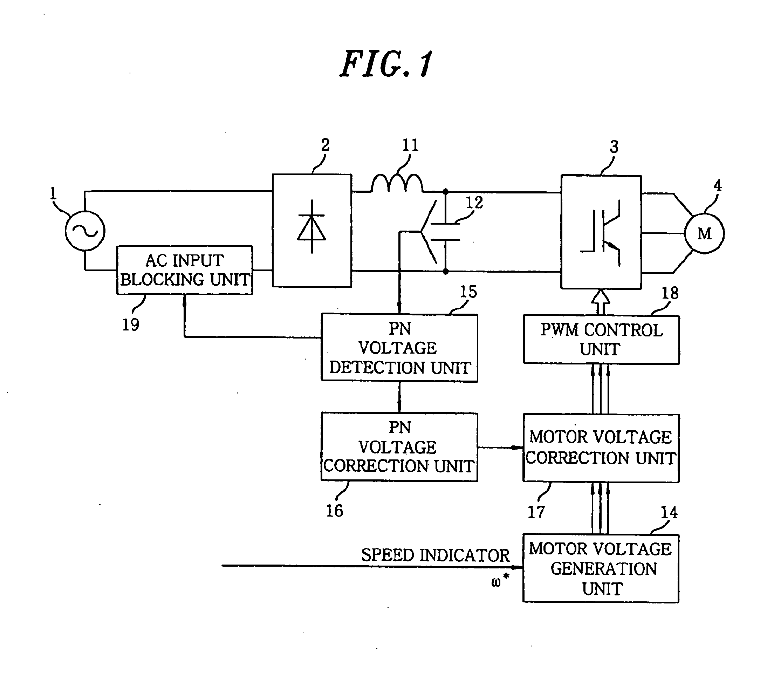

Fig. 1 shows a block diagram illustrating a system configuration of an inverter controlling apparatus for driving a motor in accordance with a first embodiment of the present invention.

Referring to Fig. 1, there is illustrated a main circuit including AC power source 1, diode bridge 2 for converting an AC electric power to a DC electric power, small capacity reactor 11 having an inductance less than or equal to 2 mH, small capacity capacitor 12 having a capacitance less than or equal to 100 $\mu$F, inverter 3 for transforming a DC electric power to an AC electric power, and motor 4 driven by the AC electric power transformed by inverter 3. In Fig. 1, although small capacity reactor 11 is shown to be connected to an output side i.e., a DC output, of diode bridge 2, it may be connected to an input side, i.e., an AC input, thereof.

Meanwhile, a controlling circuit includes motor voltage generation unit 14 for generating phase voltage indicator values of motor 4 based on a speed indicator $\omega^*$ supplied from an outside; inverter DC voltage detection unit 15 for detecting a DC voltage value of inverter 3; inverter DC voltage correction unit 16 for obtaining a PN voltage correcting coefficient by dividing a preset DC voltage reference value of inverter 3 by the detected DC voltage value of inverter 3 which is obtained by inverter DC voltage detection unit 15 and setting the PN voltage correcting coefficient as a preset maximum value of the PN voltage correcting coefficient in case the detected DC voltage value is smaller than or equal to zero; motor voltage correction unit 17 for correcting the phase voltage indicator values by multiplying the phase voltage indicator values obtained by motor voltage generation unit 14 with the PN voltage correcting coefficient that is an output value of inverter DC voltage correction unit 16; and PWM control unit 18 for generating a PWM signal of inverter 3 which corresponds to the motor voltage indicator value generated by motor voltage correction unit 17 when it is supplied to motor 4.

Hereinafter, a detailed operation thereof will be explained.

Motor voltage generation unit 14 generates phase voltage indicator values $v_u{}^*$, $v_v{}^*$ and $v_w{}^*$ that can be defined as:

$$\begin{cases} v_u^* = V_m \sin \theta_1 \\ v_v^* = V_m \sin(\theta_1 - 2\pi/3) \\ v_w^* = V_m \sin(\theta_1 + 2\pi/3) \end{cases} \qquad \text{Eq. (1),}$$

wherein $V_m$ is a motor voltage value, and $\theta_1$ is obtained by integrating the speed indicator $\omega^*$ along time as follows:

$$\theta_1 = \int \omega^* dt \qquad \text{Eq. (2).}$$

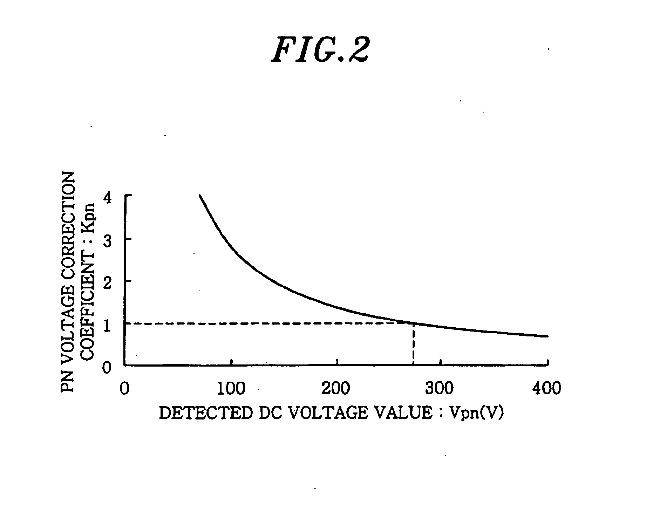

Further, Fig. 2 shows an operation of inverter DC voltage correction unit 16 in accordance with the first preferred embodiment of the present invention. Inverter DC voltage correction unit 16 calculates a PN voltage correcting coefficient $k_{pn}$ by using a predetermined DC voltage reference value $V_{pn0}$ of inverter 3 and a detected DC voltage value $V_{pn}$ of inverter 3 obtained by inverter DC voltage detection unit 15, which is defined as:

$$k_{pn} = \frac{V_{pn0}}{v_{pn} + \delta_0} \qquad \text{Eq. (3).}$$

Herein, since the present invention employs a small capacity capacitor, the detected DC voltage value $V_{pn}$ may become zero. Thus, a minute constant term $\delta_0$ should be set in order to prevent a denominator of Eq. (3) from being zero.

Further, instead of using the minute constant term $\delta_0$ in Eq. (3), the PN voltage correcting coefficient $k_{pn}$ may be set to be a predetermined maximum value thereof in case the DC voltage detecting value $V_{pn}$ is smaller than or equal to zero, thereby preventing the denominator from being zero.

In other words, the PN voltage correcting coefficient $k_{pn}$ may be defined as:

$$k_{pn} = \begin{cases} k_{pn\_max} \ (v_{pn} \le 0) \\ V_{pn0}/v_{pn} \ (v_{pn} > 0) \end{cases} \qquad \text{Eq. (4),}$$

wherein $k_{pn\_max}$ is the predetermined maximum value of the PN voltage correcting coefficient $k_{pn}$.

Further, motor voltage correction unit 17 outputs corrected motor voltage indicator values $\overset{\bullet}{v}_{uh}^{*}, \overset{\bullet}{v}_{vh}^{*}$ and $\overset{\bullet}{v}_{wh}^{*}$ by using the motor voltage indicator values $\overset{\bullet}{v}_{u}^{*}, \overset{\bullet}{v}_{v}^{*}$ and $\overset{\bullet}{v}_{w}^{*}$ and the PN voltage correcting coefficient $k_{pn}$, which are defined as:

$$\begin{cases} \overset{\bullet}{v}_{uh}^{*} = k_{pn} \cdot \overset{\bullet}{v}_{u}^{*} \\ \overset{\bullet}{v}_{vh}^{*} = k_{pn} \cdot \overset{\bullet}{v}_{v}^{*} \\ \overset{\bullet}{v}_{wh}^{*} = k_{pn} \cdot \overset{\bullet}{v}_{w}^{*} \end{cases} \qquad \text{Eq. (5).}$$

In this way, an inverter controlling apparatus for driving a motor, which has a small size, a light weight and a cost effectiveness, can be implemented by using the small capacity reactor and the small capacity capacitor. Further, even in case it may be difficult or impossible to operate the motor due to a large variation of the inverter DC voltage, the inverter operates to keep a voltage applied to the motor nearly constant such that the motor can operate stably.

Hereinafter, an operation of AC input blocking unit 19 will be described.

Since the present invention employs small capacity capacitor 12, if an instantaneous variation of the AC power source voltage directly affects the inverter DC voltage.

For example, in case the AC power source voltage fluctuates from 200 V, i.e., a regular voltage thereof, to 250 V, the inverter DC voltage increases approximately from 280 V to 350 V. Thus, a peripheral circuit should be designed to include components having a sufficient withstanding voltage by considering such voltage fluctuation. However, an increase in a withstanding voltage capacity of the inverter itself and/or peripheral components connected to base lines of the inverter leads to a problem of high cost.

However, in AC input blocking unit 19, in case the detected DC voltage value of inverter 3 which is obtained by inverter DC voltage detection unit 15 is greater than or equal to a preset threshold value, it is possible to prevent a sharp increase of the inverter DC voltage by temporarily blocking the AC power input. Therefore, the withstanding voltage capacity of inverter 3 and/or peripheral circuits thereof does not need to be increased more than necessary.

Further, the inverter DC voltage can be controlled to be within a certain range regardless of an operation state of the motor, i.e., whether it is being operated or stopped.

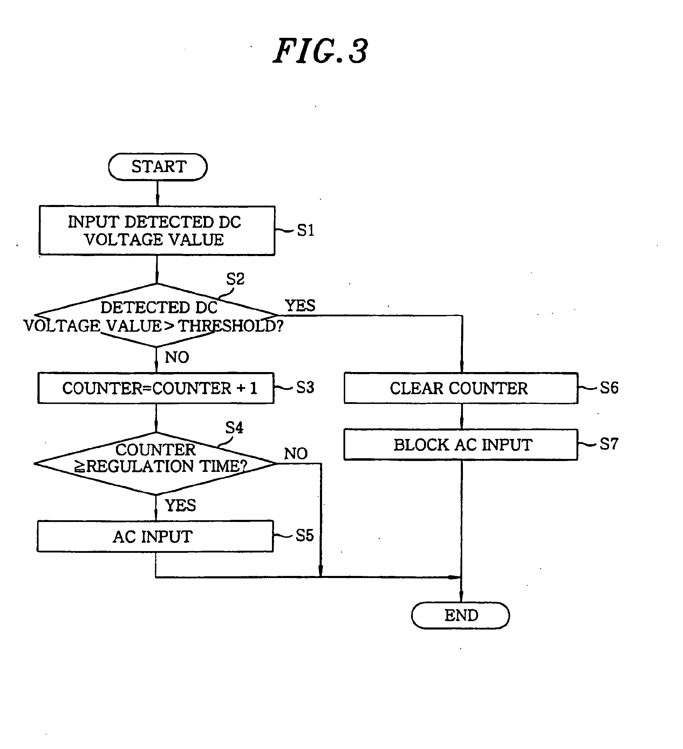

Fig. 3 depicts a flowchart showing an operation of AC input blocking unit 19 in accordance with the first preferred embodiment of the present invention.

The detected DC voltage value $v_{pn}$ of inverter 3 which is obtained by inverter DC voltage detection unit 15 is inputted to AC input blocking unit 19 (step S1) and then compared with a threshold value (step S2). Thereafter, in case the detected DC voltage value $v_{pn}$ is greater than the threshold value, a counter is cleared (step S6) and then an AC input is blocked (step S7).

In case the detected DC voltage value $v_{pn}$ of inverter 3 is smaller than or equal to the threshold value, the counter value is incremented by 1 (step S3). Then, if the counter does not exceed a regulation time (step S4), the AC input block state is maintained, thereby preventing a repeated hunting operation of an input state, i.e., recurrence of power on and off. Otherwise, the AC input is resumed, thereby maintaining power-on state (step S5).

Inverter DC voltage detection unit 15 preferably includes a low pass filter for filtering out a noise. Further, it is cost-effective to implement the low pass filter by employing an operation device such as a microcomputer, a DSP (digital signal processing) device or the like.

(Embodiment 2)

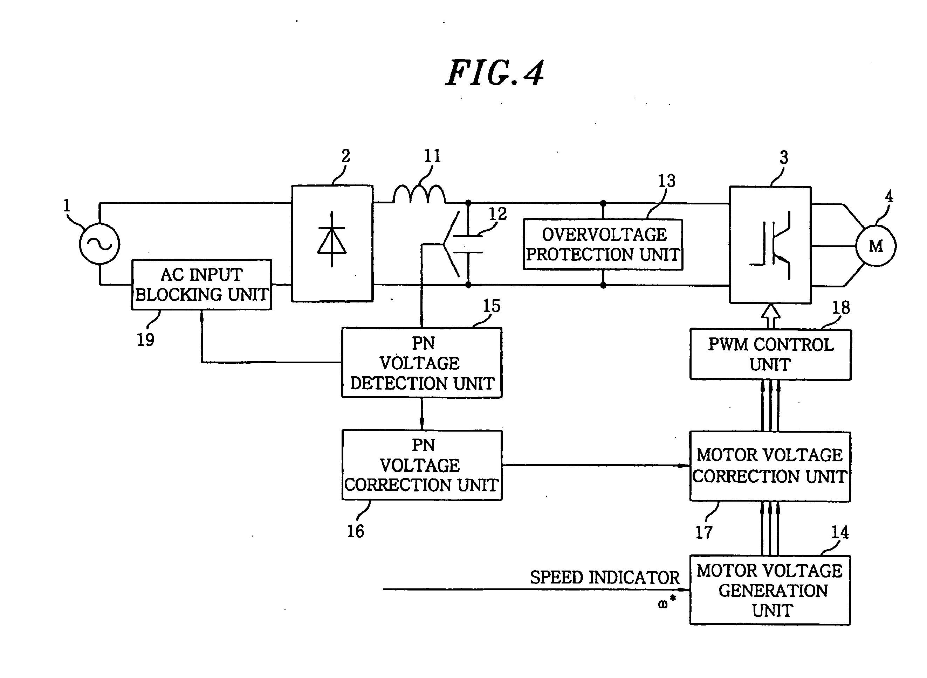

Fig. 4 provides a block diagram describing a system configuration of an inverter controlling apparatus for driving a motor in accordance with a second preferred embodiment of the present invention. A main circuit of the apparatus further includes overvoltage protection unit 13 in addition to that of the first embodiment.

Overvoltage protection unit 13 may be a voltage absorption type device such as a surge absorber or the like, a voltage discharge type device such as a gas arrester or the like, or any other device capable of suppressing a voltage increasing.

In this embodiment, during a normal operation of the apparatus, a DC voltage is so suppressed as to prevent overvoltage protection unit 13 from operating. Further, overvoltage protection unit 13 operates to stop an operation of inverter 3 only if it is necessary to urgently protect inverter 3. Accordingly, it is possible to provide a highly reliable apparatus and enlarge a life of components thereof by employing overvoltage protection unit 13.

(Embodiment 3)

In the following, a method of setting an inverter operation frequency in accordance with the present invention will be described in detail.

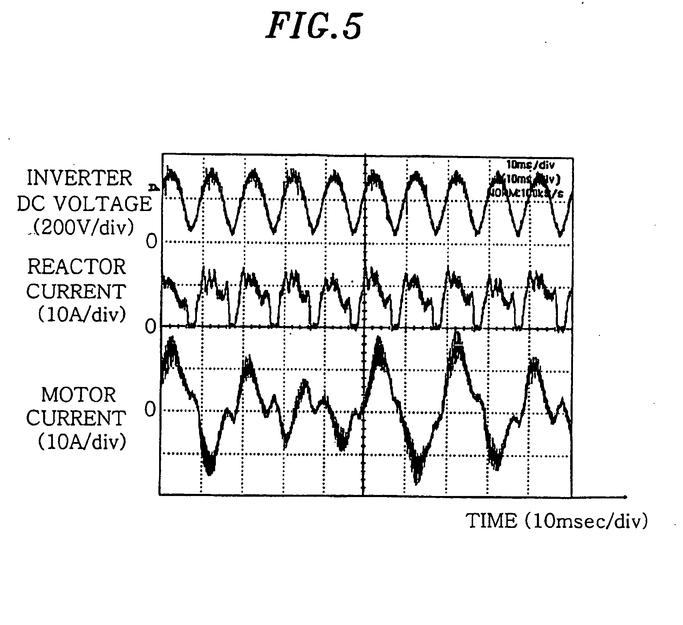

Since the inverter controlling apparatus for driving a motor employs a small capacity capacitor, the inverter DC voltage pulsates in a large scale with a frequency two times higher than an AC power source frequency $f_s$ as shown in Fig. 5.

Accordingly, if the inverter operation frequency $f_1$ obtained from a motor speed indicator $\omega^*$ supplied from an outside is an even multiple of the AC power source frequency $f_s$, the inverter DC voltage is synchronized with the pulsating frequency (frequency two times higher than the AC power source frequency $f_s$), which leads to a resonance.

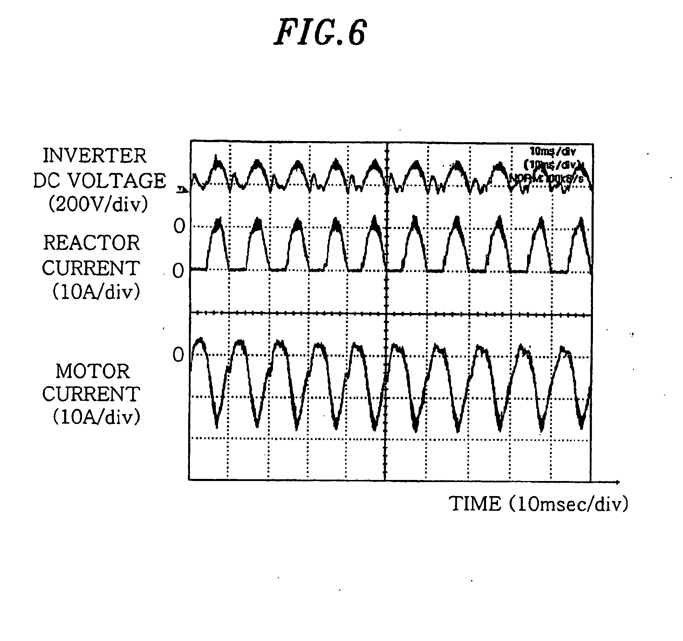

Fig. 6 shows a result of an operation of the apparatus in which the inverter operation frequency $f_1$ becomes two times the AC power source frequency $f_s$. As shown in Fig. 6, a resonance occurs since the inverter DC voltage is synchronized with the pulsating frequency, and a negative DC component is overlapped with a motor current.

Accordingly, a brake torque occurs in the motor, resulting in a reduction of its output torque or an increase of a motor loss.

The result shown in Fig. 6 was obtained under a condition where an inductance of the small capacity reactor is 0.5 mH; a capacitance of the small capacitance capacitor is 10 $\mu$F; an output of an AC power source is 220 V (50 Hz); an inverter operation frequency is 100 Hz (wherein a two-poled motor is employed, so that the inverter operation frequency is equal to a motor speed indicator); and an inverter carrier frequency is 5 kHz.

In setting the inverter operation frequency $f_1$, it should be avoided that the inverter operation frequency $f_1$ is fixed steadily in case it is defined as follows:

$$f_1 = 2nf_s \pm \Delta f_d \qquad\qquad \text{Eq. (6),}$$

wherein $n$ is an integer, and $\Delta f$ is a predetermined frequency width. Further, the frequency width $\Delta f$ is so set as to be less affected by the aforementioned resonance effect.

Further, if the inverter operation frequency $f_1$ exceeds a resonance frequency obtained by employing Eq. (6), the inverter operation frequency $f_1$ should be prevented from being fixed to a resonance frequency by way of quickly changing the inverter operation frequency $f_1$ into a transient state of an acceleration or a deceleration.

Furthermore, it is not necessary to set the frequency width $\Delta f$ to a certain value depending on an operational environment of the apparatus (for example, in a state of light load). In this case, the frequency width $\Delta f$ is preferably set to be zero.

In accordance with the aforementioned method, by avoiding the resonance between the inverter frequency and the AC power source frequency, the motor can be operated stably.

(Embodiment 4)

In the following, there will be described a method of determining a specification of the small capacity capacitor and the small capacity rector in accordance with the present invention.

In the inverter controlling apparatus for driving a motor in accordance with the present invention, a specification of the small capacity reactor and the small capacitance capacitor is determined in such a way that a resonance frequency $f_{LC}$ (LC resonance frequency) of the small capacity reactor and the small capacitance capacitor becomes greater than 40 times the AC power source frequency $f_s$ in order to clear values of the IEC specification by suppressing a harmonic wave component of the AC power source current.

Herein, given that the capacity of the small capacitance capacitor is C [F] and the inductance of the small capacity reactor is L [H], the LC resonance frequency $f_{LC}$ is defined as:

$$f_{LC} = \frac{1}{2\pi\sqrt{LC}}$$   Eq. (7).

In other words, the specification of the small capacitance capacitor and the small capacity reactor is determined to satisfy $f_{LC} > 40\, f_s$ (since harmonic wave components of the AC power source current of up to 40th order are defined in the IEC specification).

As described above, by determining the specification of the small capacitance capacitor and the small capacity reactor, the harmonic wave components of the AC power source current can be suppressed, thereby clearing the values of the IEC specification.

Further, the embodiments 1 to 4 of the present invention can be applied to an apparatus which drives a motor by employing an inverter circuit, such as an air conditioner, a refrigerator, an electric washing machine, an electric drier, an electric vacuum cleaner, a blower, a heat pump hot water supplier or the like. In any one of the aforementioned appliances, a freedom of design can be improved by miniaturizing the inverter controlling apparatus for driving a motor, thereby enabling a manufacturing of the low-priced appliances.

As mentioned above, the inverter controlling apparatus for driving a motor in accordance with the present invention, which has a small size, a light weight and a cost effectiveness, can be implemented by using the small capacity reactor and the small capacity capacitor. Further, even when it is difficult or impossible to drive a motor due to a large variation of an inverter DC voltage, the motor can be driven stably by nearly constantly maintaining a voltage applied to the motor by using the inverter DC voltage correction unit. Furthermore, since it is possible to avoid a malfunctioning of peripheral circuit components of the motor due to an increase of an AC power source voltage, a reliability of the motor can be improved.

While the invention has been shown and described with respect to the preferred embodiments, it will be understood by those skilled in the art that various changes and modification may be made without departing from the scope of the invention as defined in the following claims.

**Claims**

1.   An inverter controlling apparatus for driving a motor, comprising:

a rectifying circuit having an AC electrical source as an input, including:

a diode bridge (2); and
a reactor (11) connected to a DC output or an AC input of the diode bridge (2);

an inverter (3) for converting a DC electric power into an AC electric power, a capacitor (12) being connected to DC input lines of the inverter (3),
a motor (4).
an inverter DC voltage detection unit (15) for detecting a DC voltage value of the inverter;
a motor voltage generation unit (14) for generating phase voltage indicator values of the motor based on a motor speed indicator supplied from an outside;
a motor voltage correction unit (17) for correcting the phase voltage indicator values by multiplying the phase voltage indicator values obtained by the motor voltage generation unit (14) with a PN voltage correcting coefficient which is an output value of an inverter DC voltage correction unit (16), and
a PWM (Pulse Width Modulation) control unit (18) for outputting a PWM signal to the inverter in response to the corrected phase voltage indicator values;

**characterised by**:
the capacitor (12) connected to the DC input lines of the inverter (3) having such a small capacitance that the DC voltage value may become zero; and further comprising
an AC input blocking unit (19) for blocking an AC power input in case the detected DC voltage value of the inverter (3) which is obtained by the inverter DC voltage detection unit (15) is greater than or equal to a preset threshold value; and
the inverter DC voltage correction unit (16) for outputting the PN voltage correcting coefficient by dividing a predetermined DC voltage reference value of the inverter (3) by the detected DC voltage value of the inverter (3) which is obtained by the inverter DC voltage detection unit (15) in case the detected DC voltage value is greater than zero, and setting the PN voltage correcting coefficient to be a predetermined maximum value of the PN voltage correcting coefficient in case the detected DC voltage value is smaller than or equal to zero.

2. The apparatus of claim 1, further comprising an overvoltage protection unit (13) connected in parallel to the capacitor (12), wherein the overvoltage protection unit (13) operates when the inverter is required to be urgently stopped.

3. The apparatus of claim 1 or 2, wherein an inverter operation frequency obtained based on the motor speed indicator supplied from the outside is prevented from being fixed steadily within a predetermined frequency bandwidth having a resonant frequency as a center value thereof, the resonant frequency being an even multiple of the AC power source frequency.

4. The apparatus of any one of claims 1 to 3, wherein a specification of the reactor and the capacitor is determined so that the resonance frequency of the reactor and the capacitor becomes greater than 40 times the AC power source frequency.

5. An air conditioner comprising the inverter controlling apparatus for driving a motor of any one of claims 1 to 4.

**Patentansprüche**

1. Wechselrichter-Steuervorrichtung zum Antreiben eines Motors, umfassend:

eine Gleichrichterschaltung mit einer elektrischen Wechselstromquelle als Eingang, umfassend:

eine Diodenbrücke (2); und
eine mit einem Gleichstromausgang oder einem Wechselstromeingang der Diodenbrücke (2) verbundene Drossel (11);

einen Wechselrichter (3) zum Umwandeln von elektrischem Gleichstrom in elektrischen Wechselstrom, wobei ein Kondensator (12) mit Gleichstromeingangsleitungen des Wechselrichters (3) verbunden ist;
einen Motor (4);
eine Wechselrichtergleichspannungs-Detektionseinheit (15) zum Detektieren eines Gleichspannungswerts des Wechselrichters;
eine Motorspannungserzeugungseinheit (14) zum Erzeugen von Phasenspannungsindikatorwerten des Motors basierend auf einem von außen zur Verfügung gestellten Motorgeschwindigkeitsindikator;
eine Motorspannungskorrektureinheit (17) zum Korrigieren der Phasenspannungsindikatorwerte durch Multiplizieren der von der Motorspannungserzeugungseinheit (14) erhaltenen Phasenspannungsindikatorwerte mit einem PN-Spannungskorrekturkoeffizienten, der ein Ausgangswert einer Wechselrichtergleichspannungs-Korrektureinheit (16) ist; und
eine PWM(Pulsweitenmodulations)-Steuereinheit (18) zum Ausgeben eines PWM-Signals an den Wechselrichter in Reaktion auf die korrigierten Phasenspannungsindikatorwerte;
**dadurch gekennzeichnet, dass**
der mit den Gleichstromeingangsleitungen des Wechselrichters (3) verbundene Kondensator (12) eine derart kleine Kapazität aufweist, dass der Gleichspannungswert Null werden kann; und dass sie außerdem umfasst:
eine Wechselstromeingangssperreinheit (19) zum Sperren eines Wechselstromeingangs, falls der detektierte Gleichspannungswert des Wechselrichters (3), der von der Wechselrichtergleichspannungs-Detektionseinheit (15) erhalten wird, größer als oder gleich einem vorgegebenen Schwellenwert ist; und
die Wechselrichtergleichspannungs-Korrektureinheit (16) zum Ausgeben des PN-Spannungskorrekturkoeffizienten durch Dividieren eines vorgegebenen Gleichspannungs-Referenzwerts des Wechselrichters (3) durch den detektierten Gleichspannungswert des Wechselrichters (3), der durch die Wechselrichtergleichspannungs-Detektionseinheit (15) erhalten wird, falls der detektierte Gleichspannungswert größer als Null ist, und zum Setzen des PN-Spannungskorrekturkoeffizienten auf einen vorgegebenen Maximalwert des PN-Spannungskorrekturkoeffizienten, falls der detektierte Gleichspannungswert kleiner als oder gleich Null ist.

2. Vorrichtung nach Anspruch 1, die außerdem eine parallel zum Kondensator (12) geschaltete Überspannungsschutzeinheit (13) umfasst, wobei die Überspannungsschutzeinheit (13) auslöst, wenn der Wechselrichter dringend gestoppt werden soll.

3.  Vorrichtung nach Anspruch 1 oder 2, bei der das ununterbrochene Fixieren einer Wechselrichterbetriebsfrequenz, die basierend auf dem von außen zur Verfügung gestellten Motorgeschwindigkeitsindikator erhalten wird, innerhalb einer vorgegebenen Frequenzbandbreite mit einer Resonanzfrequenz als zentralem Wert verhindert wird, wobei die Resonanzfrequenz eine gerade Vielfache der Frequenz der Wechselstromquelle ist.

4.  Vorrichtung nach einem der Ansprüche 1 bis 3, bei der eine Spezifikation der Drossel und des Kondensators so festgelegt ist, dass die Resonanzfrequenz der Drossel und des Kondensators größer als das Vierzigfache der Frequenz der Wechselstromquelle wird.

5.  Klimaanlage, umfassend die Wechselrichter-Steuervorrichtung zum Antreiben eines Motors nach einem der Ansprüche 1 bis 4.


## Revendications

1.  Dispositif de commande d'un onduleur pour alimenter un moteur, comprenant :

    ♦ un pont de diodes (2) ; et
    ♦ un réacteur (11) relié à une sortie de courant continu ou une entrée de courant alternatif du pont de diodes (2) ;

    + un onduleur (3) pour convertir une alimentation électrique de courant continu en alimentation électrique de courant alternatif, un condensateur (12) étant relié à des lignes d'entrée de courant continu de l'onduleur (3) ;
    ♦ un moteur (4) ;
    ♦ une unité de détection de tension de courant continu d'onduleur (15) destinée à détecter une valeur de tension de courant continu de l'onduleur ;
    + une unité de génération de tension du moteur (14) destinée à générer des valeurs d'indicateur de tension de phase du moteur sur la base d'un indicateur de vitesse du moteur fourni depuis l'extérieur ;
    ♦ une unité de correction de la tension du moteur (17) destinée à corriger les valeurs de l'indicateur de tension de phase en multipliant les valeurs de l'indicateur de tension de phase par l'unité de génération de tension du moteur (14) avec un coefficient de correction de tension PN qui est une valeur de sortie d'une unité de correction de tension de courant continu d'onduleur (16) ; et
    ♦ une unité de contrôle PWM (Modulation de Largeur d'Impulsion) (18) pour transmettre un signal PWM à l'onduleur en réponse aux valeurs de l'indicateur de tension de phase corrigées ;

    caractérisé par :
    ♦ le condensateur (12) relié aux lignes d'entrée de courant continu de l'onduleur (3) ayant une capacitance si petite que la valeur de tension de courant continu peut devenir nulle ; et comprenant également une unité de blocage d'entrée de courant alternatif (19) pour bloquer une entrée d'alimentation de courant alternatif au cas où la valeur de tension de courant continu détectée de l'onduleur (3) obtenue par l'unité de détection de tension de courant continu de l'onduleur (15) est supérieure ou égale à la valeur seuil prédéterminée ; et
    ♦ l'unité de correction de tension de courant continu de l'onduleur (16) pour la production du coefficient de correction de tension PN en divisant une valeur de référence de tension de courant continu prédéterminée de l'onduleur (3) par la valeur de tension de courant continu détectée de l'onduleur (3) obtenue par l'unité de détection de tension de courant continu (15) de l'onduleur au cas où la valeur de tension de courant continu détectée est supérieure à zéro, et la fixation du coefficient de correction de tension PN pour être une valeur maximale prédéterminée du coefficient de correction de tension PN dans le cas où la valeur de tension de courant continu détectée est inférieure ou égale à zéro.

2.  Dispositif selon la revendication 1, comprenant également une unité de protection de surtension (13) reliée en parallèle au condensateur (12), dans lequel l'unité de protection de surtension (13) fonctionne quand l'onduleur doit être arrêté d'urgence.

3.  Dispositif selon la revendication 1 ou 2, dans lequel une fréquence de fonctionnement de l'onduleur obtenue sur la base de l'indicateur de vitesse du moteur fourni depuis l'extérieur ne peut pas être fixée régulièrement dans une largeur de bande de fréquence prédéterminée ayant une fréquence de résonance comme valeur centrale de celle-ci, la fréquence de résonance étant un multiple régulier de la fréquence de la source d'alimentation de courant alternatif.

**4.** Dispositif selon l'une quelconque des revendications 1 à 3, dans lequel on détermine une caractéristique du réacteur et du condensateur de telle sorte que la fréquence de résonance du réacteur et du condensateur devienne supérieure à 40 fois la fréquence de la source d'alimentation de courant alternatif.

**5.** Climatiseur comprenant le dispositif de contrôle de l'onduleur alimentant un moteur selon l'une quelconque des revendications 1 à 4.

## FIG.1

EP 1 557 935 B1

FIG.2

# FIG.3

```
         ┌─────────────┐
         (   START     )
         └─────────────┘
                │
      ┌──────────────────────┐
      │  INPUT DETECTED DC    │──── S1
      │   VOLTAGE VALUE       │
      └──────────────────────┘
                │
               S2
           ╱────────────╲
          ╱  DETECTED DC  ╲       YES
    ─────╱ VOLTAGE VALUE >  ╲────────────────┐
         ╲  THRESHOLD?      ╱                 │
          ╲────────────────╱                  │
                │ NO                          │
      ┌──────────────────────┐      ┌──────────────────┐
      │ COUNTER=COUNTER + 1   │─ S3  │  CLEAR COUNTER   │── S6
      └──────────────────────┘      └──────────────────┘
                │                             │
               S4                             │
           ╱────────────╲           ┌──────────────────┐
          ╱   COUNTER    ╲   NO      │  BLOCK AC INPUT  │── S7
          ╲ ≧REGULATION   ╱──────┐   └──────────────────┘
          ╲   TIME?      ╱       │            │
           ╲────────────╱        │            │
                │ YES            │            │
      ┌──────────────────────┐   │            │
      │      AC INPUT         │─S5│            │
      └──────────────────────┘   │            │
                │                 │            │
                └─────────────────┤            │
                                  └────────────┤
                                        ┌─────────────┐
                                        (    END      )
                                        └─────────────┘
```

13

# FIG.4

EP 1 557 935 B1

## FIG.5

INVERTER
DC VOLTAGE
(200V/div)

REACTOR
CURRENT
(10A/div)

MOTOR
CURRENT
(10A/div)

TIME (10msec/div)

## FIG.6

INVERTER
DC VOLTAGE
(200V/div)

REACTOR
CURRENT
(10A/div)

MOTOR
CURRENT
(10A/div)

TIME (10msec/div)

*FIG.7*

DC POWER SOURCE DEVICE

AC POWER SOURCE

PWM CONTROL UNIT

MOTOR VOLTAGE GENERATION UNIT

SPEED INDICATOR

$\omega^*$

# FIG.8

*FIG.9*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H9266674 A
- US 5481451 A
- EP 115251 A
- US 6313602 B